# EUROPEAN PATENT APPLICATION

(11) **EP 4 650 019 A1**
(43) Date of publication of application: **19.11.2025**
(21) Application number: 25176464.3
(22) Date of filing: 14.05.2025
(51) Int. Cl.: A63F 13/355, A63F 13/352, A63F 13/52, A63F 13/67, H04N 19/132, H04N 19/172, H04N 19/146

(54) **GAMEPLAY VIDEO ENCODING SYSTEM AND METHOD**

(30) Priority: 15.05.2024 GB 202406868; 10.07.2024 GB 202410013
(71) Applicant: Sony Interactive Entertainment Inc., Tokyo 108-0075 (JP)
(72) Inventor: BARMAN, Nabajeet, London, W1F 7LP (GB); VILLANUEVA-BARREIRO, Marina, London, W1F 7LP (GB); BIGOS, Andrew James, London, W1F 7LP (GB); MOTILLA, Daniel Montero, London, W1F 7LP (GB); SANDERS, Matthew William, London, W1F 7LP (GB); ZADTOOTAGHAJ, Saman, London, W1F 7LP (GB); CURRIUS, Roc Ramon, London, W1F 7LP (GB)
(74) Representative: D Young & Co LLP

(57) **Abstract**

An encoding system configured to encode video of a game being executed, the video being encoded for transmission to a client device operated by a player of the game, the system comprising a game execution unit configured to execute the game, wherein executing the game comprises rendering a plurality of image frames for display to the player, a game information obtaining unit configured to obtain information about the game, including audio and/or text information associated with an image frame being rendered, a complexity estimation unit configured to estimate a spatial and/or temporal complexity of the image frame being rendered in dependence upon the obtained information, a parameter selection unit configured to select one or more encoding parameters in dependence upon the estimated spatial and/or temporal complexity, and an encoding unit configured to encode the video of the game being executed using the selected encoding parameters, the encoded video comprising the plurality of image frames for display to the player.

## Description

### BACKGROUND OF THE INVENTION

### Field of the invention

This disclosure relates to a gameplay video encoding system and method.

### Description of the Prior Art

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly nor impliedly admitted as prior art against the present invention.

While traditionally video games have been played using a local games console or other processing device (such as a personal computer or mobile phone), for many users the ability to leverage processing capabilities of a remote device and instead stream gameplay video to a local device has become increasingly appealing.

For some users, this can be achieved by using an in-home streaming arrangement in which a powerful processing device (such as a games console or personal computer) is used to execute a game; the video output of this game can then be streamed over a local network to a less-powerful processing device, such as a tablet computer, mobile phone, or handheld gaming device. This allows a user to play content that can only be executed (or at least executed with high visual quality) by the more powerful processing device (due to system requirements, for instance), without being tied to the location or form factor of that device.

In some cases, a user may not have access to or wish to make use of a powerful local processing device. In this case, a user may instead stream gameplay video from a remote source - this can be a games console or the like in another location, for example, or a cloud gaming server. In any case, it is expected that gameplay video is received by the user's device, such as a mobile phone or portable device, via the internet.

To ensure that a user is able to experience a good quality of gameplay in streaming arrangements it is important that the gameplay video is received with low latency and high visual quality. This enables a user to respond to events within the games in a timely manner, as well as to view content with a good level of detail. In view of this, it is considered that an efficient and effective video encoding scheme should be utilised to improve the latency and visual quality associated with a stream.

It is in the context of the above discussion that the present disclosure arises.

### SUMMARY OF THE INVENTION

This disclosure is defined by claim 1. Further respective aspects and features of the disclosure are defined in the appended claims.

It is to be understood that both the foregoing general description of the invention and the following detailed description are exemplary, but are not restrictive, of the invention.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Figure 1 schematically illustrates an entertainment system;
Figure 2 schematically illustrates a video streaming system;
Figure 3 schematically illustrates a video encoding method;
Figure 4 schematically illustrates an encoding system configured to encode video of a game being executed, the video being encoded for transmission to a client device operated by a player of the game; and
Figure 5 schematically illustrates an encoding method configured to encode video of a game being executed, the video being encoded for transmission to a client device operated by a player of the game.

### DESCRIPTION OF THE EMBODIMENTS

Referring now to the drawings, wherein like reference numerals designate identical or corresponding parts throughout the several views, embodiments of the present disclosure are described.

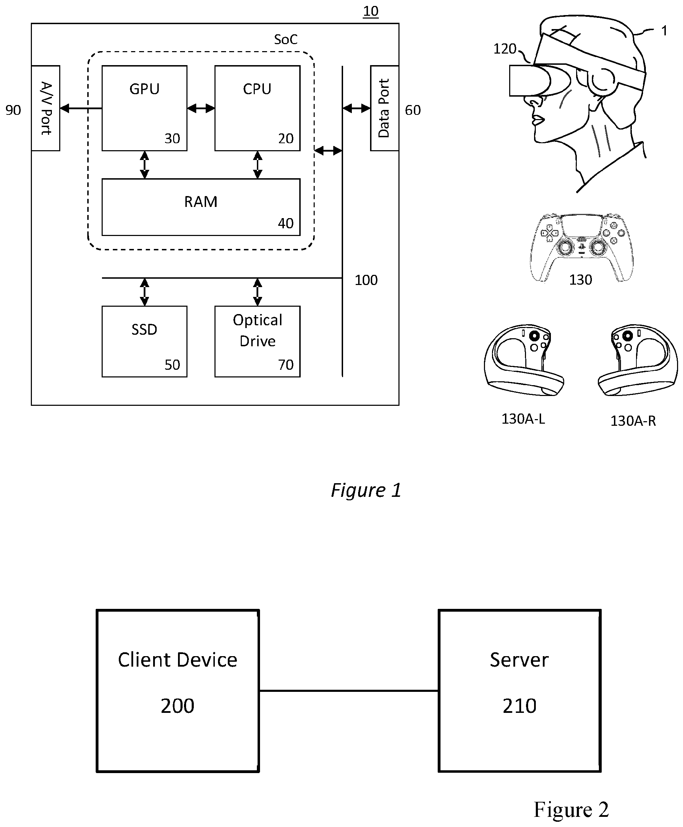

Referring to Figure 1, an example of an entertainment system 10 is a computer or console.

The entertainment system 10 comprises a central processor or CPU 20. The entertainment system also comprises a graphical processing unit or GPU 30, and RAM 40. Two or more of the CPU, GPU, and RAM may be integrated as a system on a chip (SoC).

Further storage may be provided by a disk 50, either as an external or internal hard drive, or as an external solid state drive, or an internal solid state drive.

The entertainment device may transmit or receive data via one or more data ports 60, such as a USB port, Ethernet^{®} port, Wi-Fi^{®} port, Bluetooth^{®} port or similar, as appropriate. It may also optionally receive data via an optical drive 70.

Audio/visual outputs from the entertainment device are typically provided through one or more A/V ports 90 or one or more of the data ports 60.

Where components are not integrated, they may be connected as appropriate either by a dedicated data link or via a bus 100.

An example of a device for displaying images output by the entertainment system is a head mounted display 'HMD' 120, worn by a user 1.

Interaction with the system is typically provided using one or more handheld controllers 130, and/or one or more VR controllers (130A-L,R) in the case of the HMD.

Figure 2 schematically illustrates a streaming system in accordance with implementations of the present disclosure. In this Figure, a single client device 200 is shown in communication via a network (represented by the line) with a server 210. Of course, in practice a plurality of client devices may be in communication with a single server, and a client device may be in communication with multiple servers at the same time. While referred to here as a 'server', the unit 210 may be any suitable processing device which is configured to execute a video game and provide video of the gameplay to another device via a network or internet connection.

The client device 200 may be implemented as an entertainment device 100 as shown in Figure 1, for example, or any other processing hardware. Examples of client devices include games consoles, mobile phones, other portable devices, computers, televisions, and laptops.

The server 210 may be implemented using any suitable processing hardware, and may include any suitable configuration of CPUs and/or GPUs required to execute a game to generate the video content to be streamed to the client device. Of course, the server 210 should also include communication means to enable communication with the client device 200 over the network connection.

Typically, a game streaming arrangement executes a video game to generate images for display based upon received inputs from the client device. These generated images are then encoded in real-time into a video stream for transmission to the client device, where the video is to be displayed to a user (who then views the video, and provides inputs to control the gameplay).

When encoding any video for transmission, it is considered advantageous if the bitstream can be reduced in size while maintaining image quality so as to aid efficiency or reduce the required bandwidth to enable transmission via a slower network connection. While this can be implemented effectively for pre-generated video, such as video-on-demand content, this is due to the content being available in advance for processing prior to being transmitted to client devices.

One such example of this is the use of complexity estimation as an indication of how much compression may be realised when encoding video, and the quality trade-off therein. The compressibility of content is considered as this influences the bitrate of the encoded video - when using the same settings, a more complex (and therefore less compressible) video sequence would require a higher bitrate for encoding at a given quality level as compared to a sequences of lower complexity due to the reduced level of redundancy that is able to be exploited between frames, for instance.

Complexity for video encoding consists of two different aspects - spatial complexity and temporal complexity. Spatial complexity is a measure of the amount of detail present within a frame, such that content with large areas of relatively uniform content (such as the pitch in a football match) is considered to have a low degree of complexity. Meanwhile, temporal complexity is a measure of the amount of movement between frames; as such, video comprising objects that have a high velocity are typically considered to have a higher temporal complexity. The degree of complexity can be quantified in any suitable manner, with one approach being the use of energy functions for this purpose.

While this can be applied to pre-generated videos, such an approach is not particularly suitable for the streaming of video game content due to the fact that it is generated in real time in response to user inputs. Given the sensitivity of such an application to latency, the increased time required for this complexity analysis to be performed would not be considered desirable.

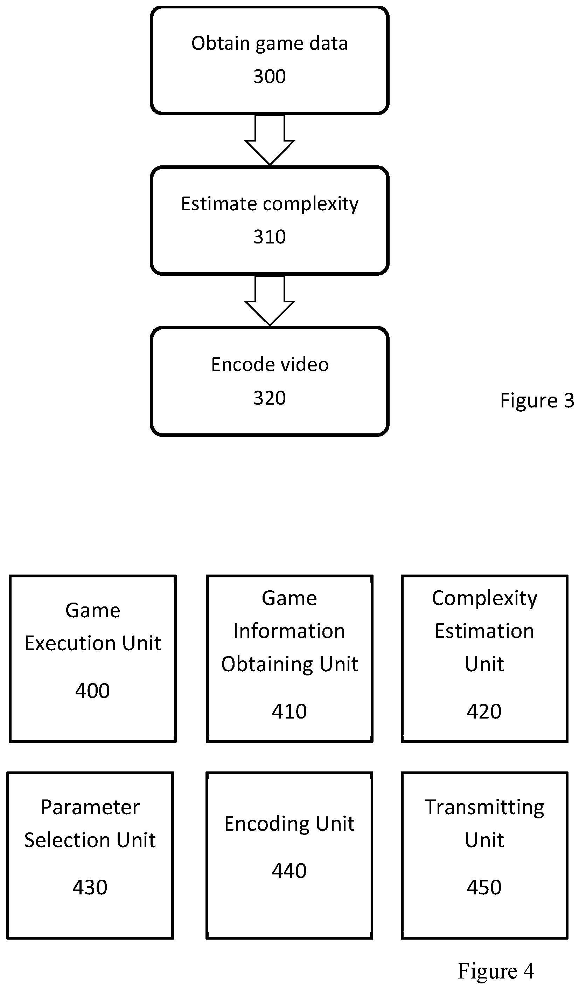

Figure 3 schematically illustrates a method which seeks to provide the benefits of such a process in the context of video game streams, which would otherwise not be considered a suitable source of content for such a process. Different aspects of this method are discussed in more detail below, with the method of Figure 3 providing a broad outline of the approach taken.

A step 300 comprises obtaining game data from the game itself; in other words, obtaining data from the source of the video content rather than obtaining data about the video content itself. Implementations of the present disclosure are particularly directed towards the use of audio, haptic, or text data obtained from the game as the game data; such data can include background music, sound effects, captions, text descriptions of a scene (for example, generated by a game for accessibility purposes), haptic feedback (typically described using a waveform, and so analogous to audio), or subtitles. Such data is referred to in this description as 'audio or other data' in this document.

A step 310 comprises estimating the complexity of image frames being rendered in dependence upon the obtained game data; more specifically, the complexity of the image frames is estimated on the basis of audio or other data obtained in step 300. This may utilise a predefined algorithm, which may be specific to particular games or genres (for example), which weights various factors defined by the game data obtained in step 300 to estimate complexity. Alternatively, or in addition, a trained machine learning model may be used to derive an estimated complexity on the basis of the information obtained in step 300.

This may include an overall complexity estimate, and/or individual estimates of the spatial complexity and/or the temporal complexity. These estimates may be derived on a frame-by-frame basis for each frame or a subset of frames (such as every second or third frame), or may be generated for a group of frames (or indeed partial frames) as appropriate for a given implementation. In addition, information from the N previously encoded frames (where N can be any integer ≥ 1), their actual complexity, and the prediction accuracy (for instance, considering the predicted complexity minus the actual complexity for a given frame) can be used in addition to improve the prediction accuracy over time.

A step 320 comprises encoding a video of the game being played using encoding parameters that are selected in dependence upon the estimated complexity (or complexities) generated in step 310. In the case that the estimated complexity is high, the encoding parameters may be selected to compensate for this by reducing an image resolution (for example) to maintain a target bitrate or remain below a threshold bitrate (for example, a threshold imposed by a measured or predicted client bandwidth). In some implementations the encoding may also be modified so as to provide a greater level of detail in some areas of the encoded images; for instance, if the audio suggests a particular area will be gazed at by a user then a foveated rendering effect may be applied.

By using a method in accordance with that of Figure 3, data output by the game itself can be used for a complexity estimation rather than relying on the generated video itself (that is, a rendering result). This means that the advantages of complexity estimation with encoding may be realised without adding a significant latency burden to the video streaming process.

An example of the implementation of such a method is in an open world game which is being streamed to a user. Significant portions of such games often have a low temporal complexity associated with the imagery - as a user explores a world, they often do so at a relatively low pace and with few interactions with fast-moving objects. Such an exploration typically coincides with background audio having a relatively low intensity, and a reduced number of sound effects (or at least sound effects which are low intensity - such as walking-pace footsteps and the like).

This is in contrast to an encounter with enemies within that same game - in that case, the number of moving objects (such as the enemies) in the scene is increased and the speed of such movement may be relatively high due to the user changing their viewpoint more frequently as a part of the engagement. The level of temporal complexity of associated images is therefore increased relative to the exploration part of the game; it is also considered that the spatial complexity may be similarly increased due to the number of different models that may be present (and therefore offering more variety than open grassland or sky, for example).

As such, it is clear that there is a correlation within a game between audio and the encoding complexity of corresponding image frames. In some implementations this correlation may be derived across for a single game title, while in others a more generalised approach may be taken in which correlations are derived on a multi-game basis such as across a particular series of games, genre of games, games using shared or similar audio assets, or any other selection of games.

Similar considerations apply for the other sources of data discussed with reference to step 300. For instance, haptic feedback is expected to increase in periods of high in-game intensity - and in such periods, the image complexity is expected to increase accordingly. Similarly, subtitles (either generated by the game, or derived from the audio directly) can be descriptive of events within the content - or even their presence can be a sign of particular events (for instance, in some games it is common for the imagery to become relatively static during conversations to enable the user to focus on the conversation). Captions and scene descriptions can also be considered similarly, with scene descriptions in particular being able to offer a specific insight into the content of the images.

While described above as being used in isolation, in some implementations the complexity may be estimated on the basis of multiple sources of information. For example, both the audio and haptics may be considered, or any other combination of two or more data sources. An estimation of the complexity may be based upon each of these data sources in combination, or separate estimations of the complexity may be generated for each data source and a representative value (such as a weighted or unweighted average, a modal value, or a median value) may be derived from these separate estimations with the representative value being taken as the complexity estimate.

Estimations of the scene complexity of image content may be generated in any suitable manner; two possible approaches are considered here as illustrative examples.

The first of these approaches is that of the predictive approach. In this approach, the scene complexity is estimated on a per-frame basis. During gameplay, the associated audio, soundtrack and any other data (such as caption data) is analysed to predict the associated scene complexity for a given frame. In this manner, a separate estimation is determined for each frame, or at least each of a subset of frames (in the case that a representative sample of frames are used to inform encoding decisions, such as every second or third frame).

The second of these approaches is that of the anticipative approach. Rather than operating on a per-frame basis, this approach seeks to generate an estimate for the complexity for a longer duration - this may be any plurality of frames, but may be particularly suited to a number of frames covering a number of seconds (such as one second, five seconds, ten seconds, or thirty seconds to give some examples). Of course, the period may be determined freely for a given implementation, for example based upon the availability of audio data and the accuracy of predictions over time for given content.

While it is possible to use this anticipative approach as the sole complexity estimation upon which encoding parameters are dependent, it may be preferred to use this in combination with a more specific complexity estimation for a given frame. For instance, it is considered that this approach may be used for pre-optimisation of the content such that encoding parameters obtained on the basis of a more precise (per-frame) estimation can be applied more efficiently or with a reduced latency.

In some cases, it may be considered advantageous to use historical data to further refine the complexity estimation process. For instance, the estimated complexity for a number (such as 1, 10, 30, 60, or 100) of frames preceding the frame currently being rendered may be stored and referenced. In some implementations, it may be considered advantageous to calculate a measure of complexity based upon the previously rendered images for use in place of the estimates.

Information about the complexity (estimated or otherwise) of preceding frames may be used as a baseline for complexity estimation - for instance, a rolling average of the complexity of previous frames may be used as an indicator for the expected complexity of the current frame, as the complexity is unlikely to vary significantly between individual frames or small groups of frames (such as between a first five frames and the subsequent five frames) except during scene changes or the like.

When calculating the complexity of the frames after rendering, an analysis can be performed which indicates the accuracy of the complexity estimation for each of those frames; in other words, the complexity estimation can be compared to the calculated complexity to identify any deviations between the two. In view of this, a tolerance can be applied to future complexity estimations (such as adding a percentage value to the estimated complexity) to enable the encoding parameters to be selected in a manner that accounts for complexity possibly being higher than estimates would indicate.

In some implementations an algorithm may be provided which generates an estimated complexity on the basis of any of one or more identified characteristics of the source data (that is, the audio data or the like). For instance, the algorithm may provide an estimation of the scene complexity which increases with an identified number of sound sources, audio volume, and/or tempo of music. A weighting for each of these factors may be defined by the designer of the algorithm, such as a game developer, so as to generate a reliable estimate for the scene complexity.

While implementations according to the present disclosure can utilise such an algorithm, for instance defined by a content creator or developer, to perform the complexity estimation it may be considered advantageous in some cases to utilise a machine learning model which is trained to perform the complexity estimation. Any suitable method of training such a model may be utilised, rather than being limited to specific types. One example of a suitable approach is that of unsupervised learning.

In such an approach, the dataset used for the training can be associated sets of data from previous gameplay videos. This dataset may comprise video (or individual image frames) associated with the gameplay along with any data which would be available to the complexity estimator during use - and as such may include audio data (such as background audio and sound effects), haptic feedback information, text information based upon the audio (such as subtitles) or scene descriptions, and information about the complexity of previous frames as appropriate.

Based upon such a dataset, a model can be trained to identify a complexity from the audio or other data and optionally the complexity information associated with preceding frames. By providing calculated complexity values for different frames within the dataset, the results of a complexity estimation by the model can be compared to the actual result to determine their accuracy. This therefore enables feedback to be generated which indicates whether the model is successful or not.

In line with the above discussion of the general approach and an appropriate dataset, any suitable machine learning model may be trained to perform the complexity estimation. These may be trained for any selection of inputs - in some cases a multi-format input (such as audio and text) can be provided, while in other cases a separate model may be used to estimate the scene complexity on the basis of each of these. These estimates may be then used to generate a representative estimate in any suitable manner - such as a weighted (or unweighted) average, modal value, or median value.

Machine learning models may be trained on a per-game basis in some implementations, as the specificity may aid the reliability of predictions. In some cases, a model may be trained on a selection of games (such as a particular genre, or a range of different games) for a more generalised approach - this may reduce a processing burden in training specific models. A generic model such as this may be tailored to a specific game or set of games through additional training on a more specific dataset, for example, or specific metadata about the game (such as the game type, or particular information about the correlations between sounds and complexity) can be used to tailor the model.

Once the complexity estimation has been performed, corresponding encoding parameters are able to be selected in dependence upon the complexity estimation. This may also be performed by either a predefined algorithm (for instance, one defined by the developer of a gameplay streaming platform or of a particular game), or by utilising a further trained machine learning model (or expanding the existing one to include a complexity estimation and encoding parameter selection).

Encoding parameters are typically selected so as to enable the best possible resolution or frame rate, or a target bitrate, to be achieved, for example, although the selection may be performed so as to optimise any video property as desired. Constraints which may be considered when selecting the encoding parameters include the resolution able to be displayed by a client device, the available streaming bandwidth, and the rendered game bandwidth.

While a relationship between the estimated complexity and the encoding parameters may be defined by a developer so as to enable an algorithm to be applied to the complexity estimations to obtain the encoding parameters, a trained machine learning model may be preferred. Such a model may be trained using a dataset comprising estimated (and/or calculated) complexities for frames along with encoding parameters which are considered to be 'optimal'. In some cases, the dataset may further comprise the audio or other data for those frames (or indeed the full dataset used for training the complexity estimation model described above).

The encoding parameters which are considered to be 'optimal' are parameters which have been selected by a developer as representative of the best possible encoding for the content. These may be the parameters which, within the imposed constraints, offer the best value for a given aspect of the video (such as a highest resolution); alternatively these may be the parameters which lead to a video which is judged to have the highest video quality. The video quality may be measured by a trained machine learning model, for instance, or may be selected based upon the preferences of a developer or a corpus of viewers who assign a rating or otherwise vote upon a selection of differently-encoded versions of the same video.

However the optimal encoding parameters are determined for videos or image frames represented by the dataset, it is considered that a model may be trained to learn a correspondence between these parameters and data including frame complexity and optionally the additional audio or other data.

In some implementations it is considered suitable to use an encoding parameter selection process which is typically used for video-on-demand applications or the like rather than determining a game-specific model. By using the estimated complexity generated in accordance with the above discussion, an existing encoding parameter selection process may be able to be modified to operate in real-time on a frame-by-frame basis.

While implementations in accordance with the above discussion can be used to generate improvements to the coding efficiency of content, it is considered that further modifications may be made which can increase the effectiveness of such implementations further (particularly with audio that doesn't necessarily have a strong correlation with image coding complexity). These function by leveraging audio-specific factors in the complexity estimation so as to better or more reliably inform the encoding step. Each of these may be used alone or in any combination with other modifications as appropriate for a given implementation.

The first of these incorporates the classification of sound effects which make up the audio associated with the image frames being encoded. By classifying these sound effects, insight into the events taking place can be derived from the audio. For instance, if a sound effect associated with explosions is to be used with a particular image frame then it can be inferred that an explosion is taking place in that image frame. Explosions are typically associated with periods of high motion between images, and as such a higher temporal complexity would be expected to be observed. Similarly, should sound effects such as birdsong and a babbling brook be identified then this can be associated with a calm forest scene - while temporal complexity may be low (as little action would be expected to occur), spatial complexity may be higher as such an environment may result in very detailed images. This may be due to there being a large number of smaller objects, such as leaves, birds, insects, trees, and the like, which are often highly detailed.

Such a classification may be based upon metadata associated with an audio file corresponding to the sound effect; for instance, metadata may identify an object which acts as a sound source (or at least identify a class of object), an event in which the sound effect is used, and/or one or more parameters which indicate an expected change to the encoding complexity of an image at the time of use of the sound effect.

Alternatively, or in addition, a classification process may be performed which includes an analysis of the content of the audio file. This analysis can include any processing to identify parameters of the sound effect - such as identifying a sound source, or characterising the sound as being likely to correspond to high or low spatial and/or temporal complexity. For instance, this may be based upon a frequency analysis or analysis of how audio levels change throughout a sound effect. The analysis may be based upon a single sound effect, or the sound effects associated with a particular image may be considered in combination so as to allow the overall effect to be identified and a corresponding expected image complexity to be determined on the basis of the identified overall effect.

A second modification is that of utilising the three-dimensional information that is provided by audio. When generating a video output, most content will utilise a three-dimensional soundfield to model the audio component; this can be accessible from a game engine, for example, or may be available at system level within a games console. Based upon this soundfield, the distribution of audio (and associated sound sources) within a virtual scene (and therefore corresponding image) can be identified.

This information can be utilised in any suitable manner. For instance, the three-dimensional information can be used to determine whether a sound source is actually present within the user's field of view - if the sound source appears to be behind the user, then it will not appear within the corresponding images. As such, those sound sources may be ignored or at least given a different weighting when estimating image coding complexity.

Alternatively, or in addition, this information can be used to determine where in an image the sound source appears - with the complexity therefore being able to be estimated on a finer scale. This can lead to the encoding of the images being performed so as to vary the encoding in different parts of an image - with sound sources having a particularly high spatial complexity being afforded a lower compression, for instance, so as to preserve fine details.

In some cases the three-dimensional soundfield may not be available - for instance, when rendering video using legacy content such as an older video game. In such cases, the rendered audio output can be analysed (for instance, performing sound separation and/or localisation processing) to identify information such as the location of individual sound sources. Given the increased processing that this may entail, it may be preferable in some implementations to perform this analysis for a frame preceding the one to be encoded. For instance, audio associated with a frame that is to be displayed one or more frames before that frame being encoded may be similarly representative of the content of the image frame (particularly if the frame rate is high, such as sixty frames per second or more).

A third modification is that of estimating a user's gaze direction within an image on the basis of the audio information. For instance, certain sound effects may be provided within interactive content so as to draw the user's attention (or may reliably have that effect); by identifying these, and an associated location within the image, the user's gaze direction may be inferred. Based upon this information, a foveated rendering style approach may be taken to the encoding, in which a reduced level of compression is applied to an image region associated with sound effects likely to draw the user's gaze. This may be applied to the image region associated with the sound effect with the highest likelihood of attracting user attention, or image regions associated with any selection of all or a subset of the sound effects.

Figure 4 schematically illustrates an encoding system configured to encode video of a game being executed, the video being encoded for transmission to a client device operated by a player of the game. The system comprises a game execution unit 400, a game information obtaining unit 410, a complexity estimation unit 420, a parameter selection unit 430, an encoding unit 440, and a transmitting unit 450. These units may be implemented using any suitable processing hardware (such as one or more CPUs and/or GPUs) located within a device for remotely executing gameplay - such as the server 210 of Figure 2.

The game execution unit 400 is configured to execute the game, wherein executing the game comprises rendering a plurality of image frames for display to the player. The game execution unit 400 is further configured to receive inputs from the player to control the gameplay, for instance over a network connection which enables communication between the game execution unit 400 (exemplified by a cloud gaming server or remote games console) and the client device associated with the player.

The game information obtaining unit 410 is configured to obtain information about the game, including audio and/or text information associated with an image frame being rendered or a preceding image frame. This may include information in any suitable format; for instance, a three-dimensional sound field associated with the game may be obtained from the game engine or at a system level. Alternatively, or in addition, audio for output may be obtained, and/or information from a game engine that indicates which sounds are to be used at a time corresponding to the image frame being rendered.

A further alternative or additional form of information is that of metadata associated with the audio that indicates one or more properties or characteristics, such as an identification of the sound source or an associated event or level of image complexity. Text information that may be obtained includes any subtitles, closed captions, or scene descriptions corresponding to the image frame being rendered, for example. While the text information may be used alone in the complexity estimation and encoding process, it may be preferable to utilise this in addition to the use of audio data - in this manner, the text information can be used to refine, augment, and/or confirm the results of any processing of the audio.

The game information obtaining unit 410 may also be configured to obtain information about the game being executed - this may be the game itself, or one or more higher-level parameters associated with the game (rather than details about the rendering itself). For instance, the obtained information about the game being executed may include one or more of a title of the game, a current level being played, a genre associated with the game, a difficulty setting associated with the game, and one or more graphics settings associated with the game. Each of these may be used to improve the complexity estimation, particularly in conjunction with an external database or the like which comprises complexity information with a correlation to these factors - such as an average complexity having been calculated for a given game and used as a baseline. This information may include specific information about audio files and their usage within a specific game (or group of games), such as their correlations with complexity or visual events within the game.

Once obtained by the game information obtaining unit 410, the obtained information may be subjected to any suitable processing to aid the complexity estimation. For instance, audio may be subjected to sound separation processing, sound localisation processing, sound source identification, and/or any other parameters or characteristics that may be identified (such as frequency or volume information). In the case of the obtained information being textual, this may be subjected to natural language processing or the like to identify the meaning of the text or to otherwise identify references to sound sources or events.

The complexity estimation unit 420 is configured to estimate a spatial and/or temporal complexity of the image frame being rendered in dependence upon the obtained information. This may be based upon the audio or text data itself, or may be based upon secondary information that can be derived from that information. Examples of the secondary information can include an event which is identified on the basis of the audio or text, or information about the location of one or more sound sources relative to the field of view. In particular, the complexity estimation unit 420 may be configured to utilise the results of sound separation and/or sound localisation processes performed by the game information obtaining unit 410 on obtained audio for estimating the spatial and/or temporal complexity of the image frame being rendered.

This may be performed by inputting the obtained information into an algorithm which estimates a complexity, for example. Alternatively, the complexity estimation unit 420 may be configured to use a trained machine learning model to estimate the spatial and/or temporal complexity of the image frame being rendered. While in many cases both the spatial and temporal complexity of the image frame being rendered may be estimated, benefits are still able to be obtained by estimating either of these and selecting encoding parameters based upon this. For instance, if a particular game is known to have a consistently low spatial complexity then the encoding parameters may be selected on the basis of the temporal complexity estimation only.

In some implementations the complexity estimation unit 420 may be configured to store information about the estimated complexity for associated audio; this may be in the form of metadata directly associated with the audio files, or a separate data structure (such as a lookup table) may be generated which stores information about the typical level of complexity of images associated with that audio.

The complexity estimation unit 420 may be configured to perform a complexity analysis for the entire image frame, or may be configured to consider the complexity on a more refined basis as appropriate. For instance in the case that a sound source localisation or other processing indicating a location of a sound source is performed, the complexity of an image region associated with that sound source may be derived. This complexity estimation may be based upon information indicating a spatial complexity of an object identified as the sound source; this information may be obtained from metadata associated with the object and/or audio file, and/or a central lookup table or the like. This can then lead to the generation of encoding parameters on a corresponding basis.

In some implementations, the complexity estimation unit 420 may be configured to obtain complexity information for one or more frames preceding the frame currently being rendered and to use this complexity information when estimating the spatial and/or temporal complexity of the image frame being rendered. This obtained complexity information may be earlier estimations, or may include calculated measures of complexity which are determined after the rendering of the respective frame or frames. In some cases, a mixed approach may be utilised in which more recent frames are associated with an estimation so as to enable time for the calculations of the complexity to be performed.

The parameter selection unit 430 is configured to select one or more encoding parameters in dependence upon the estimated spatial and/or temporal complexity; the one or more encoding parameters may include one or more of a resolution, bitrate, framerate, and bit-depth, for example. Typically, the parameter selection unit 430 would be configured to select encoding parameters associated with a reduced video quality in response to the complexity estimation unit estimating an increased complexity for the image frame being rendered; in other words, the encoding parameters are expected to cause the quality of the video to be inversely proportional to the estimated complexity.

While in some cases the encoding parameters may be selected on a per-frame basis, in some instances it may be preferable to select encoding parameters based upon a smaller portion of an image frame. For instance, this may be performed on a per-tile basis, or any other portion of an image frame. This can be utilised when the audio, haptic, or text information (or associated secondary information) is indicative of the location of a sound source or the complexity of a particular image area.

The parameter selection unit 430 may be configured to select encoding parameters which are also used to encode a plurality of image frames following the image frame currently being rendered, such that encoding parameters are selected for every Nth image frame where N is an integer greater than one. In other words, encoding parameters may be defined for groups of frames so as to avoid modifying the encoding parameters too frequently should the complexity change significantly in a small period of time. This can result in an improved viewing experience for the player, as they the frequency of changes to the video quality is reduced. This can also improve encoder efficiency, as the parameters are updated less frequently.

Alternatively, or in addition, the parameter selection unit 430 may be configured to select encoding parameters in dependence upon the complexity of one or more image frames preceding the image frame currently being rendered in addition to the estimated complexity of the image frame currently being rendered. This can enable a smoothing of the changes to the encoding parameters, as the complexity may be calculated as a rolling average or the like. This can reduce the impact of any erroneous estimations or the like, as well as result in a smoother operation of the encoder due to less significant parameter changes in any given change.

In some implementations, the parameter selection unit 430 may be configured to obtain and utilise information about a client device used by a player when determining suitable encoding parameters. This can include information such as a display size or display type, each of which may cause particular changes to encoding parameters to be more or less noticeable. For instance, a user with a smaller display size would be less likely to notice a reduction in image resolution.

The encoding unit 440 is configured to encode the video of the game being executed using the selected encoding parameters, the encoded video comprising the plurality of image frames for display to the player.

The transmitting unit 450 is configured to transmit the encoded video to a client device configured to display the video to a player. Optionally, the encoded video may be sent to one or more spectators simultaneously although in some cases it may be preferred that a time delay is introduced to prevent spectators from receiving real-time updates about the players gameplay (which can cause problems in multiplayer games, for instance).

The arrangement of Figure 4 is an example of a processor (for example, a GPU and/or CPU located in a games console or any other computing device) that is operable to encode video of a game being executed, the video being encoded for transmission to a client device operated by a player of the game, and in particular is operable to:
execute the game, wherein executing the game comprises rendering a plurality of image frames for display to the player;
obtain information about the game, including audio, haptics, and/or text information associated with an image frame being rendered;
estimate a spatial and/or temporal complexity of the image frame being rendered in dependence upon the obtained information;
select one or more encoding parameters in dependence upon the estimated spatial and/or temporal complexity;
encode the video of the game being executed using the selected encoding parameters, the encoded video comprising the plurality of image frames for display to the player; and
transmit the encoded video to a client device configured to display the video to a player.

In particular, this may be implemented by a server (such as the server 210 of Figure 2), with the client device being any suitable games console or other processing device configured to receive a video stream and display that stream.

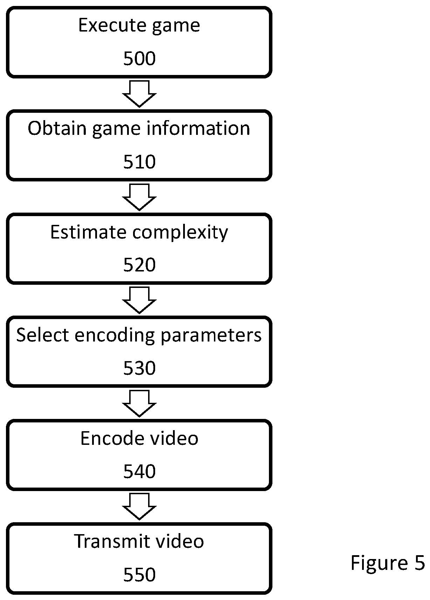

Figure 5 schematically illustrates an encoding method configured to encode video of a game being executed, the video being encoded for transmission to a client device operated by a player of the game. This may be performed in accordance with the discussion of the system of Figure 4, for example.

A step 500 comprises executing the game, wherein executing the game comprises rendering a plurality of image frames for display to the player. The rendering process also generates at least one or audio, haptics, and/or text information which is correlated to the image frames being rendered.

A step 510 comprises obtaining information about the game, including audio, haptics, and/or text information associated with an image frame being rendered. This step may further comprise performing processing on the obtained information to obtain further information; this can include natural language processing, sound source recognition, associated event identification, sound source separation, and/or sound source localisation. The results of this processing can be used with the obtained information for complexity estimation as appropriate.

A step 520 comprises estimating a spatial and/or temporal complexity of the image frame being rendered in dependence upon the obtained information. The complexity estimation may be performed on a per-frame basis, or may be performed for specific image regions in the case that the obtained information indicates localised complexity information (such as a sound source having a high spatial complexity being located in a particular region of the image frame).

A step 530 comprises selecting one or more encoding parameters in dependence upon the estimated spatial and/or temporal complexity. The encoding parameters may be selected on a per-frame basis, and/or for one or more portions of an image frame as appropriate.

A step 540 comprises encoding the video of the game being executed using the selected encoding parameters, the encoded video comprising the plurality of image frames for display to the player.

A step 550 comprises transmitting the encoded video to a client device configured to display the video to a player.

The techniques described above may be implemented in hardware, software or combinations of the two. In the case that a software-controlled data processing apparatus is employed to implement one or more features of the embodiments, it will be appreciated that such software, and a storage or transmission medium such as a non-transitory machine-readable storage medium by which such software is provided, are also considered as embodiments of the disclosure.

Thus, the foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. An encoding system configured to encode video of a game being executed, the video being encoded for transmission to a client device operated by a player of the game, the system comprising:
a game execution unit configured to execute the game, wherein executing the game comprises rendering a plurality of image frames for display to the player;
a game information obtaining unit configured to obtain information about the game, including audio, haptics, and/or text information associated with an image frame being rendered;
a complexity estimation unit configured to estimate a spatial and/or temporal complexity of the image frame being rendered in dependence upon the obtained information;
a parameter selection unit configured to select one or more encoding parameters in dependence upon the estimated spatial and/or temporal complexity; and
an encoding unit configured to encode the video of the game being executed using the selected encoding parameters, the encoded video comprising the plurality of image frames for display to the player.

2. A system according to claim 1, wherein the obtained information includes a three-dimensional soundfield.

3. A system according to any preceding claim, wherein the obtained information comprises subtitles, closed captions, or scene descriptions corresponding to the image frame being rendered.

4. A system according to any preceding claim, wherein the game information obtaining unit is configured to obtain information output by the game engine.

5. A system according to any preceding claim, wherein the game information obtaining unit is configured to perform a sound separation and/or sound localisation process on obtained audio, and wherein the complexity estimation unit is configured to utilise the results of the processes for estimating the spatial and/or temporal complexity of the image frame being rendered.

6. A system according to any preceding claim, wherein the complexity estimation unit is configured to obtain complexity information for one or more frames preceding the frame currently being rendered and to use this complexity information when estimating the spatial and/or temporal complexity of the image frame being rendered.

7. A system according to any preceding claim, wherein the complexity estimation unit is configured to use a trained machine learning model to estimate the spatial and/or temporal complexity of the image frame being rendered.

8. A system according to any preceding claim, wherein the one or more encoding parameters include one or more of a resolution, bitrate, framerate, and bit-depth.

9. A system according to any preceding claim, wherein the parameter selection unit is configured to select encoding parameters associated with a reduced video quality in response to the complexity estimation unit estimating an increased complexity for the image frame being rendered.

10. A system according to any preceding claim, wherein the parameter selection unit is configured to select encoding parameters which are also used to encode a plurality of image frames following the image frame currently being rendered, such that encoding parameters are selected for every Nth image frame where N is an integer greater than one.

11. A system according to any preceding claim, wherein the parameter selection unit is configured to select encoding parameters in dependence upon the complexity of one or more image frames preceding the image frame currently being rendered in addition to the estimated complexity of the image frame currently being rendered.

12. A system according to any preceding claim, comprising a transmitting unit configured to transmit the encoded video to a client device configured to display the video to a player.

13. An encoding method configured to encode video of a game being executed, the video being encoded for transmission to a client device operated by a player of the game, the method comprising:
executing the game, wherein executing the game comprises rendering a plurality of image frames for display to the player;
obtaining information about the game, including audio, haptics, and/or text information associated with an image frame being rendered;
estimating a spatial and/or temporal complexity of the image frame being rendered in dependence upon the obtained information;
selecting one or more encoding parameters in dependence upon the estimated spatial and/or temporal complexity; and
encoding the video of the game being executed using the selected encoding parameters, the encoded video comprising the plurality of image frames for display to the player.

14. Computer software comprising instructions which, when the software is executed by a computer, causes the computer to carry out the method of claim 13.

15. A non-transitory machine-readable storage medium which stores computer software according to claim 14.
